# EUROPEAN PATENT APPLICATION

(11) **EP 3 557 653 A1**
(43) Date of publication of application: **23.10.2019**
(21) Application number: 19166783.1
(22) Date of filing: 02.04.2019
(51) Int. Cl.: H01M 2/10, B60K 1/04

(54) **BATTERY PACK**

(30) Priority: 18.04.2018 JP 2018079617
(71) Applicant: Honda Motor Co., Ltd., Tokyo 107-8556 (JP)
(72) Inventor: OZAWA, Hiroyuki, Saitama, 351-0193 (JP); SHINODA, Ryo, Wako-shi, Saitama, 351-0193 (JP)
(74) Representative: Herzog, Markus

(57) **Abstract**

In a battery pack, a battery driving an electric vehicle is housed inside a case. A skeleton member extending in a vehicle width direction is provided on a bottom wall of the case. The skeleton member has a hat-shaped section having an upper wall, paired side walls, and paired flanges and opening downwardly. The flange is fixed to the bottom wall. Part of the battery is supported on an upper face of the flange. Therefore, by supporting the battery by utilizing the skeleton member reinforcing the case against the impact of a side collision, it is possible to make a special battery support member unnecessary and achieve small size and light weight of the battery pack, and also to reduce the dimension in the height direction of the battery pack compared with a case where part of a battery is supported on an upper face of a skeleton member.

## Description

### BACKGROUND OF THE INVENTION

### FIELD OF THE INVENTION

The present invention relates to a battery pack in which a battery for driving an electric vehicle is housed in an interior of a case.

### DESCRIPTION OF THE RELATED ART

Japanese Patent Application Laid-open No. 2006-176105 has made known an arrangement in which a front side stack frame and rear side stack frame having a hat-shaped section extending in the vehicle width direction are provided on a bottom wall of a fuel cell system compartment, and front and rear end parts of a fuel cell are supported on upper faces of the front side stack frame and the rear side stack frame is known from.

In the above conventional arrangement, since the end parts of the fuel cell are supported on the upper faces of the stack frames, the position of the upper face of the fuel cell becomes high, the thickness in the up-down direction of the fuel cell system compartment increases, and there is a possibility that it will become difficult to mount it under the floor of a vehicle.

### SUMMARY OF THE INVENTION

The present invention has been accomplished in light of the above circumstances, and it is an object thereof to reduce the dimension in the up-down direction of a battery pack housing a battery of an electric vehicle.

In order to achieve the object, according to a first aspect of the present invention, there is provided a battery pack in which a battery for driving an electric vehicle is housed in an interior of a case, wherein a skeleton member extending in a vehicle width direction is provided on a bottom wall of the case, the skeleton member has a hat-shaped section having an upper wall, a pair of side walls, and a pair of flanges and opening downwardly, the flange is fixed to the bottom wall of the case, and part of the battery is supported on an upper face of the flange.

In accordance with the first aspect, since, with regard to the battery pack, in which the battery for driving the electric vehicle is housed in the interior of the case, the skeleton member extending in the vehicle width direction is provided on the bottom wall of the case, the skeleton member has a hat-shaped section having the upper wall, the pair of side walls, and the pair of flanges and opening downwardly, the flange is fixed to the bottom wall of the case, and part of the battery is supported on the upper face of the flange, not only is it possible, by supporting the battery by utilizing the skeleton member for reinforcing the case against the impact of a side collision, to make a special battery support member unnecessary and achieve a small size and a light weight of the battery pack, but it is also possible to reduce the dimension in the height direction of the battery pack compared with a case in which part of a battery is supported on an upper face of a skeleton member.

According to a second aspect of the present invention, in addition to the first aspect, a reinforcing member formed from a bent plate material is provided along an outside part in the vehicle width direction of the case, a lower part of the reinforcing member goes around a lower face of the bottom wall of the case and is fixed via a layered part, and another part of the battery is supported on the bottom wall of the case above the layered part.

In accordance with the second aspect, since the reinforcing member formed from a bent plate material is provided along the outside part in the vehicle width direction of the case, the lower part of the reinforcing member goes around the lower face of the bottom wall of the case and is fixed via the layered part, and another part of the battery is supported on the bottom wall of the case above the layered part, it is possible, by supporting the weight of the battery by utilizing the reinforcing member for a side collision provided along the outer side part in the vehicle width direction of the case, to achieve a light weight without requiring special reinforcement for the battery case.

According to a third aspect of the present invention, in addition to the first or second aspect, the battery is a battery module formed by layering a plurality of battery cells, and a cell layering direction of the battery module is a direction parallel to the skeleton member.

In accordance with the third aspect, since the battery is a battery module formed by layering a plurality of battery cells, and the cell layering direction of the battery module is a direction that is parallel to the skeleton member, it is possible to reliably support the battery by means of the skeleton member without generating wasteful space within the battery case.

According to a fourth aspect of the present invention, in addition to the first aspect, the battery is a battery module formed by layering a plurality of battery cells, a cell layering direction of the battery module is a direction orthogonal to the skeleton member, and opposite end parts in the cell layering direction of the battery module are supported on the skeleton member.

In accordance with the fourth aspect, since the battery is a battery module formed by layering a plurality of battery cells, the cell layering direction of the battery module is a direction that is orthogonal to the skeleton member, and the opposite end parts in the cell layering direction of the battery module are supported on the skeleton member, it is possible to reliably support the battery by means of the skeleton member without generating wasteful space within the battery case.

The above and other objects, characteristics and advantages of the present invention will be clear from detailed descriptions of the preferred embodiments which will be provided below while referring to the attached drawings.

### BRIEF DESCRIPTION OF THE DRAWINGS

FIG. 1 is a plan view of a battery pack with a cover detached (first embodiment).
FIG. 2 is a perspective view of a battery module (first embodiment).
FIG. 3 is a sectional view along line 3-3 in FIG. 1 (first embodiment).
FIG. 4 is a sectional view along line 4-4 in FIG. 1 (first embodiment).
FIG. 5 is a sectional view along line 5-5 in FIG. 1 (first embodiment).
FIG. 6 is a plan view of a battery pack with a cover detached (second embodiment).

### DESCRIPTION OF THE PREFERRED EMBODIMENTS

### FIRST EMBODIMENT

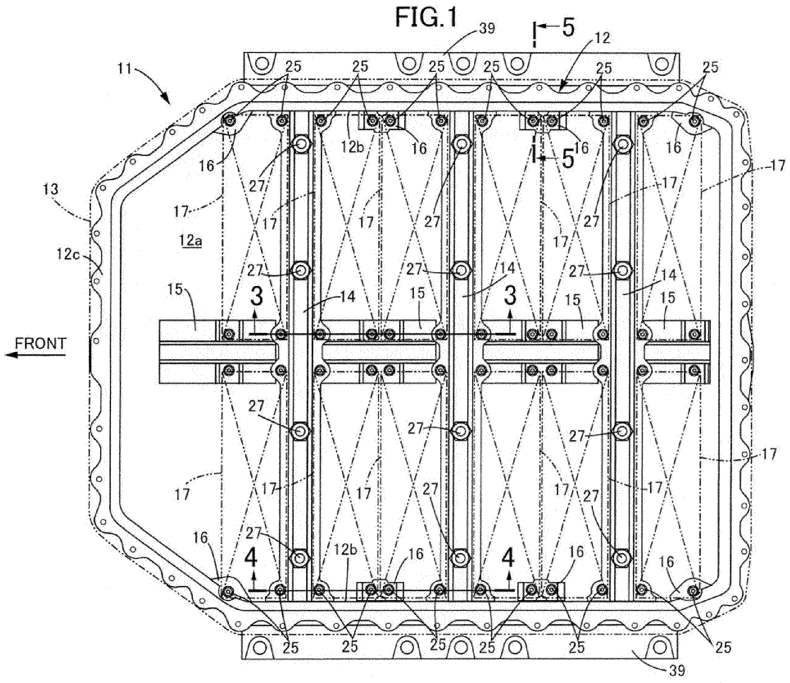

A first embodiment of the present invention is explained below by reference to FIG. 1 to FIG. 5.

As shown in FIG. 1, a battery pack 11 mounted under a floor of an electric vehicle includes a container-shaped case 12 having an open upper face and a cover 13 blocking an opening on the upper face of the case 12. Three cross members 14 (as a skeleton member) extending in the vehicle width direction at predetermined intervals in the fore-and-aft direction are provided on a bottom wall 12a of the case 12, and lengthwise frames 15 extending in the fore-and-aft direction so as to be orthogonal to the three cross members 14 are provided on a center line of the case 12. The lengthwise frames 15 are divided into four sections at positions intersecting the three cross members 14. Furthermore, four support brackets 16 are provided on each of the left and the right on a section of the bottom wall 12a of the case 12 that is in contact with side walls 12b on opposite sides in the vehicle width direction. Twelve rectangular parallelepiped battery modules 17 (as a battery) are supported on upper faces of the cross members 14, the lengthwise frames 15, and the support brackets 16.

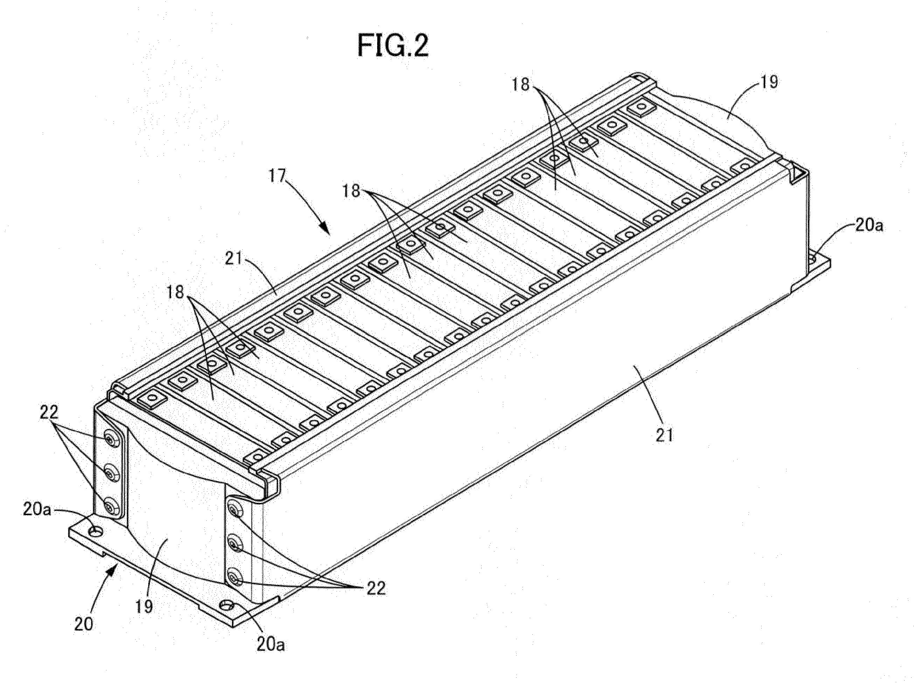

As shown in FIG. 2, each battery module 17 is formed by layering a plurality of rectangular parallelepiped battery cells 18, further layering on opposite ends thereof a pair of end plates 19, placing this on an upper face of a base plate 20, fastening opposite end parts of a pair of side plates 21 to the end plates 19 by means of bolts 22 while the side plates 21 are abutted against opposite side faces of the battery cells 18 and the end plates 19, and fastening the side plates 21 to the base plate 20 by means of a bolt (not illustrated). Two bolt holes 20a are formed in each of opposite end parts of the base plate 20 projecting from the end plates 19.

Returning to FIG. 1, in a state in which the longitudinal direction of the twelve battery modules 17 is aligned along the vehicle width direction, six thereof are arranged side by side in the fore-and-aft direction on the left side of the center line of the case 12, and six thereof are arranged side by side in the fore-and-aft direction on the right side of the center line of the case 12. Among the four bolt holes 20a provided in the base plate 20 of each battery module 17, two bolt holes 20a are supported on the cross member 14, and the remaining two bolt holes 20a are supported on the lengthwise frame 15 and the support bracket 16 respectively.

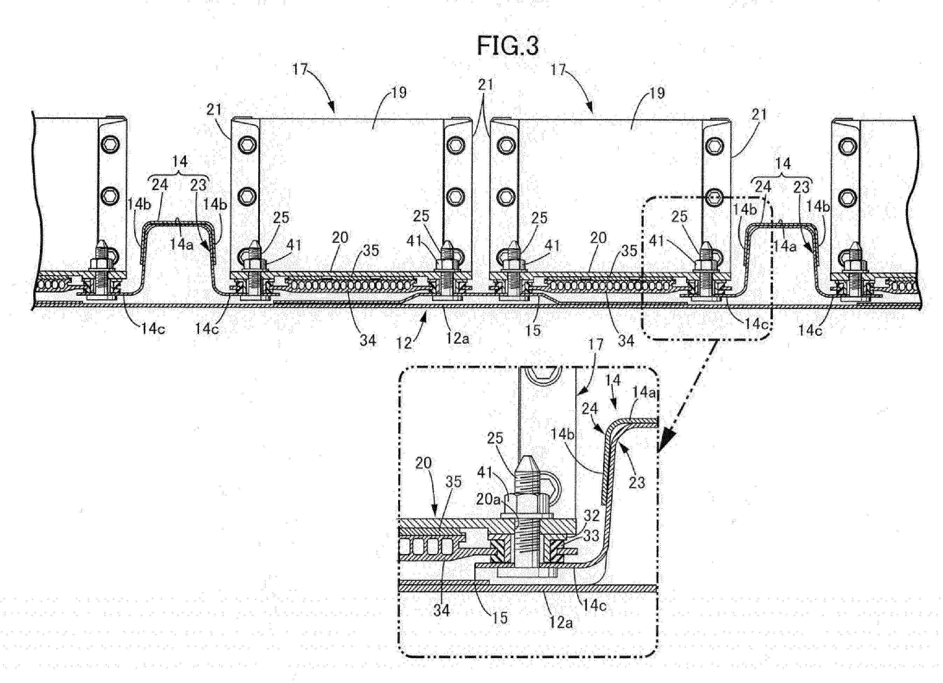

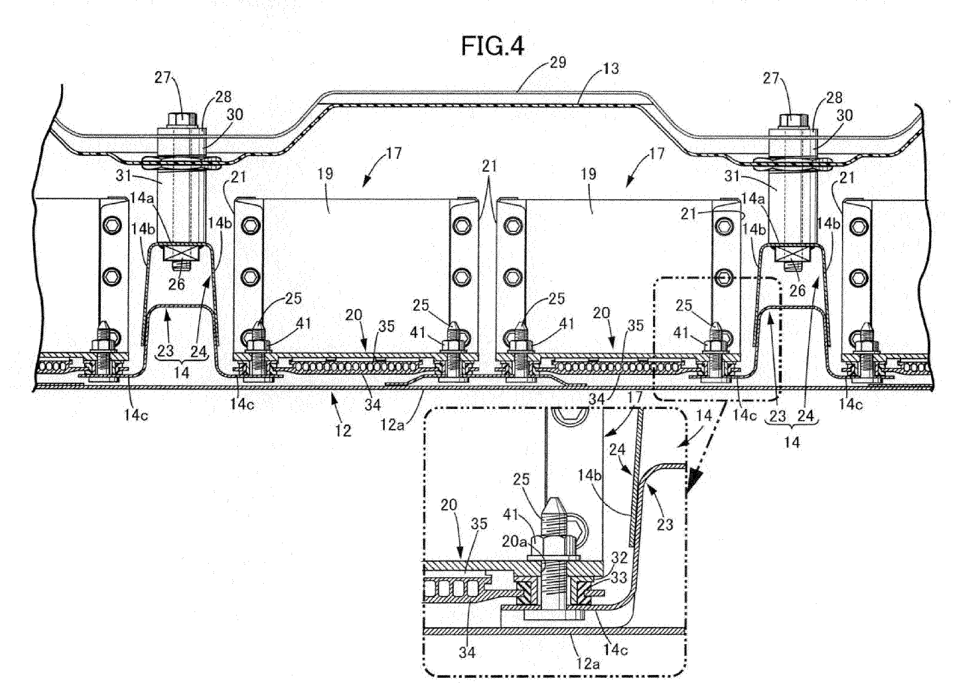

As shown in FIG. 3 and FIG. 4, the cross member 14 is one in which an upper member 24 having an inverted U-shaped section is fitted from above onto a lower member 23 having a hat-shaped section, and includes an upper wall 14a, a pair of side walls 14b, and a pair of flanges 14c. With regard to the cross member 14, the height of the upper member 24 decreases in a middle part in the vehicle width direction intersecting the lengthwise frame 15 and is fitted onto the lower member 23 without a gap (see FIG. 3), and in parts other than the above the height of the upper member 24 increases to thus form a space between itself and the lower member 23 (see FIG. 4).

The pair of flanges 14c of the cross member 14 are basically welded to the bottom wall 12a of the case 12, the flanges 14c rise from the bottom wall 12a to thus form a gap in the middle part in the vehicle width direction and opposite end parts in the vehicle width direction of the cross member 14, and stud bolts 25 having a head part housed in the gap project upward. The number of stud bolts 25 is such that there are four in the middle part in the vehicle width direction of each cross member 14 and two each in the opposite end parts in the vehicle width direction of each cross member 14. The pair of flanges 14c (see FIG. 4) are formed on opposite end parts in the vehicle width direction of the upper member 24 of the cross member 14, and these flanges 14c are welded to the bottom wall 12a of the case 12.

Bolts 27 are screwed from above into weld nuts 26 welded to a lower face of the upper wall 14a at four positions spaced in the vehicle width direction of the cross member 14, and a first collar 28, a floor panel 29, a second collar 30, the cover 13, and a third collar 31 are sandwiched between a head part of each bolt 27 and an upper face of the upper wall 14a. The battery pack 11 having the opening in the upper face of the case 12 blocked by the cover 13 is thus suspendingly supported on a lower face of the floor panel 29.

Each lengthwise frame 15 disposed so as to be orthogonal to the cross member 14 and extending in the fore-and-aft direction has opposite end parts in the fore-and-aft direction welded to the bottom wall 12a of the case 12, and four (or two) of the stud bolts 25 having the head part housed in the gap beneath an intermediate part in the fore-and-aft direction rising from the bottom wall 12a project upward. Similarly, each support bracket 16 has opposite end parts in the fore-and-aft direction welded to the bottom wall 12a and the side wall 12b of the case 12 at a position along the side wall 12b of the case 12, and two (or one) of the stud bolts 25 having the head part housed in the gap beneath the intermediate part in the fore-and-aft direction rising from the bottom wall 12a project upward.

As described above, among the stud bolts 25 fixed to the case 12, two stud bolts 25 fixed to the cross member 14, one stud bolt 25 fixed to the lengthwise frame 15, and one stud bolt 25 fixed to the support bracket 16 are fitted into the four bolt holes 20a at four corners of the base plate 20 of each battery module 17 and fastened by means of nuts 41. In this process, a collar 32 and a grommet 33 fitted onto each stud bolt 25 are sandwiched between a lower face of the base plate 20 and the upper face of the flange 14c, and a water jacket 34 resiliently supported on the grommet 33 abuts against the lower face of the base plate 20 of the battery module 17 via a heat transmitting member 35.

With regard to each battery module 17 thus housed in the case 12 of the battery pack 11, in a state in which the layering direction of the battery cells 18 is along the cross member 14, two of the four bolt holes 20a of the base plate 20 are supported on the flange 14c of the cross member 14.

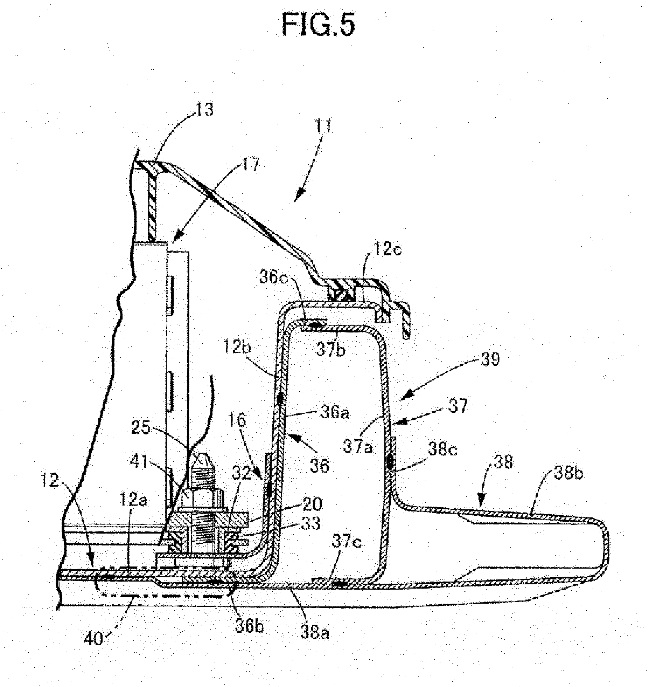

As shown in FIG. 5, reinforcing members 39 formed by joining a bent first plate material 36, second plate material 37, and third plate material 38 into a hollow closed section are provided on left and right side edges respectively of the case 12 of the battery pack 11. With regard to the first plate material 36, which has a Z-shaped section, a vertical wall portion 36a thereof is disposed along an outer face of the side wall 12b of the case 12, a lower flange 36b is welded to a lower face of the bottom wall 12a of the case 12, and an upper flange 36c opposes a lower face of an outer periphery flange 12c of the case 12. With regard to the second plate material 37, which has a C-shaped section, a vertical wall portion 37a is disposed on the outside in the vehicle width direction of the vertical wall portion 36a of the first plate material 36, and an upper flange 37b is superimposed on a lower face of the upper flange 36c of the first plate material 36 and welded. With regard to the third plate material 38, which has a J-shaped section, a lower wall portion 38a extending in the vehicle width direction is welded to the lower face of the bottom wall 12a of the case 12, the lower face of the lower flange 36b of the first plate material 36, and a lower face of a lower flange 37c of the second plate material 37, and an upper flange 38c provided at the inner end in the vehicle width direction of an upper wall portion 38b bent at the outer end in the vehicle width direction of the lower wall portion 38a and extending inward in the vehicle width direction is welded to an outer face in the vehicle width direction of the vertical wall portion 37a of the second plate material 37.

The four support brackets 16 fixed to the upper face of the bottom wall 12a are positioned above a layered part 40 in which the third plate material 38 is superimposed on the lower face of the bottom wall 12a of the case 12 and the lower face of the lower flange 36b of the first plate material 36 and welded.

The operation of the embodiment of the present invention having the above arrangement is now explained.

When the vehicle is involved in a side collision, a hollow closed section portion of the reinforcing members 39 provided on the left and right side walls 12b of the case 12 of the battery pack 11 collapses to thus absorb the collision energy, and the three cross members 14 having a hat-shaped section provided on the upper face of the bottom wall 12a and extending in the vehicle width direction suppress deformation of the case 12, thereby protecting the battery modules 17 mounted thereon. Since the battery modules 17 are supported by utilizing the cross member 14, which is a strength member reinforcing the case 12 of the battery pack 11, it is possible to cut the weight and space compared with a case in which a special frame for supporting the battery modules 17 is provided.

When the battery module 17 is supported on the upper face of the upper wall 14a of the cross member 14, the position of the battery module 17 becomes high, and there is a possibility that the dimension in the up-down direction of the battery pack 11 will increase; in the present embodiment since the battery module 17 is supported on the upper face of the flange 14c at the lowest position of the cross member 14, it is possible to lower the position of the battery module 17 by a proportion corresponding to the height of the cross member 14, thereby enabling the dimension in the up-down direction of the battery pack 11 to be reduced.

Furthermore, since the support bracket 16 supporting the outer end part in the vehicle width direction of the battery module 17 is provided at a position that overlaps from above the layered part 40 where the lower wall portion 38a of the third plate material 38 of the reinforcing member 39 goes around the lower face of the bottom wall 12a of the case 12 and is welded, it is possible, by utilizing the reinforcing member 39 and enhancing the stiffness of the support bracket 16, to much more strongly support the battery module 17.

### SECOND EMBODIMENT

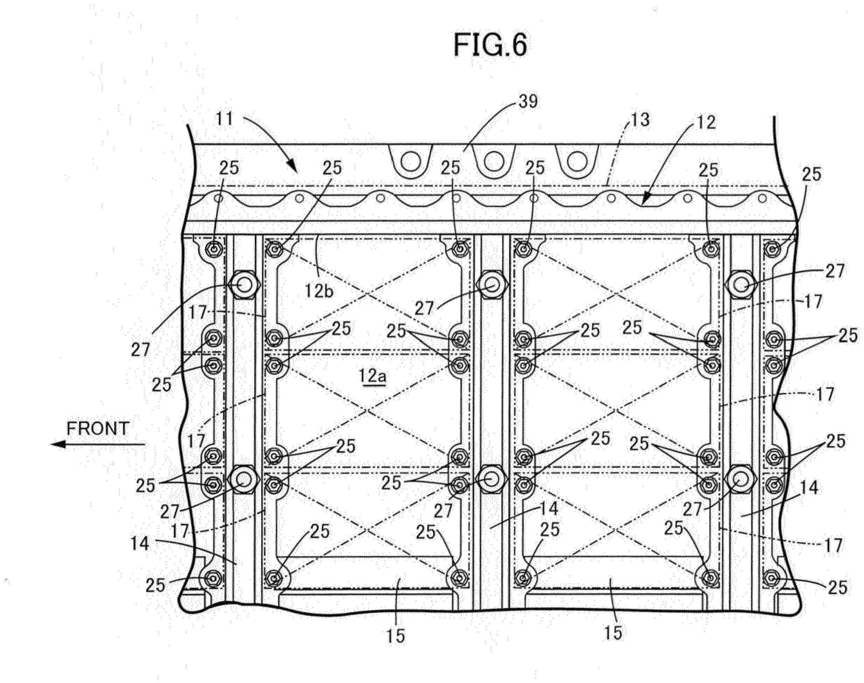

A second embodiment of the present invention is now explained by reference to FIG. 6.

In the first embodiment, the cell layering direction is along the vehicle width direction when the battery modules 17 are mounted on the case 12 of the battery pack 11, but in the second embodiment the cell layering direction is along the fore-and-aft direction. That is, with regard to each battery module 17, two bolt holes 20a on the front side are supported on the flange 14c of the cross member 14 on the front side, and two bolt holes 20a on the rear side are supported on the flange 14c of the cross member 14 on the rear side. Therefore, in accordance with the present embodiment, the stud bolts 25 of the support brackets 16 and the stud bolts 25 of the lengthwise frame 15 of the first embodiment become unnecessary.

In accordance with the present embodiment, the same effects as those of the first embodiment can be achieved.

Embodiments of the present invention are explained above, but the present invention may be modified in a variety of ways as long as the modifications do not depart from the gist of the present invention.

For example, the skeleton member of the present invention is not limited to the cross member 14 of the embodiments.

Furthermore, in the embodiments the cross member 14 is formed from two members, that is, the lower member 23 and the upper member 24, but it may be formed from a single member.

In a battery pack, a battery driving an electric vehicle is housed inside a case. A skeleton member extending in a vehicle width direction is provided on a bottom wall of the case. The skeleton member has a hat-shaped section having an upper wall, paired side walls, and paired flanges and opening downwardly. The flange is fixed to the bottom wall. Part of the battery is supported on an upper face of the flange. Therefore, by supporting the battery by utilizing the skeleton member reinforcing the case against the impact of a side collision, it is possible to make a special battery support member unnecessary and achieve small size and light weight of the battery pack, and also to reduce the dimension in the height direction of the battery pack compared with a case where part of a battery is supported on an upper face of a skeleton member.

## Claims

1. A battery pack in which a battery (17) for driving an electric vehicle is housed in an interior of a case (12),
wherein a skeleton member (14) extending in a vehicle width direction is provided on a bottom wall (12a) of the case (12),
the skeleton member (14) has a hat-shaped section having an upper wall (14a), a pair of side walls (14b), and a pair of flanges (14c) and opening downwardly,
the flange (14c) is fixed to the bottom wall (12a) of the case (12), and
part of the battery (17) is supported on an upper face of the flange (14c).

2. The battery pack according to Claim 1, wherein
a reinforcing member (39) formed from a bent plate material is provided along an outside part in the vehicle width direction of the case (12),
a lower part of the reinforcing member (39) goes around a lower face of the bottom wall (12a) of the case (12) and is fixed via a layered part (40), and
another part of the battery (17) is supported on the bottom wall (12a) of the case (12) above the layered part (40).

3. The battery pack according to Claim 1 or Claim 2, wherein
the battery (17) is a battery module (17) formed by layering a plurality of battery cells (18), and
a cell layering direction of the battery module (17) is a direction parallel to the skeleton member (14).

4. The battery pack according to Claim 1, wherein
the battery (17) is a battery module (17) formed by layering a plurality of battery cells (18),
a cell layering direction of the battery module (17) is a direction orthogonal to the skeleton member (14), and
opposite end parts in the cell layering direction of the battery module (17) are supported on the skeleton member (14).
